# EUROPEAN PATENT APPLICATION

(11) **EP 4 760 840 A1**
(43) Date of publication of application: **17.06.2026**
(21) Application number: 25774869.9
(22) Date of filing: 25.02.2025
(51) Int. Cl.: H01M 10/04, H01M 4/38, H01M 10/052, H01M 4/134, H01M 4/1395

(54) **ELECTRODE ASSEMBLY MANUFACTURING EQUIPMENT, ELECTRODE ASSEMBLY MANUFACTURING METHOD, AND ELECTRODE ASSEMBLY**

(30) Priority: 19.03.2024 KR 20240038053; 29.04.2024 KR 20240056612
(71) Applicant: LG Energy Solution, Ltd., Seoul 07335 (KR)
(72) Inventor: KIM, Hyeon Jin, Daejeon 34122 (KR); KWON, Soon Kwan, Daejeon 34122 (KR); LEE, Junghoon, Daejeon 34122 (KR); LEE, Jong Yoon, Daejeon 34122 (KR)
(74) Representative: Goddar, Heinz J.
(86) International application number: PCT/KR2025/002600
(87) International publication number: WO 2025/198207

(57) **Abstract**

The present application provides roll-to-roll type electrode assembly manufacturing equipment comprising: a sheet supply unit (100) including a first sheet supply unit for supplying a first separator sheet and a second separator sheet and a second sheet supply unit for supplying a lithium metal sheet; an application unit for applying a binder to at least one of the first separator sheet and the second separator sheet; and a lamination unit for laminating the first separator sheet and the second separator sheet while having the lithium metal sheet disposed therebetween, wherein; each of the first separator sheet and the second separator sheet includes an inner area corresponding to the lithium metal sheet at the time of lamination by the lamination unit, and an outer area at least partially surrounding the peripheral portion of the inner area in the thickness direction (TD); and the application unit applies the binder onto at least a part of the outer area of the first separator sheet and the outer area of the second separator sheet.

## Description

### Technical Field

### Cross-citation with related applications

This application was filed with the Korean Intellectual Property Office on March 19, 2024, and April 29, 2024, respectively, and this application claims the benefit of Korean Patent Application No. 10-2024-0038053 and Korean Patent Application No. 10-2024-0056612, in the Korean Intellectual Property Office, the disclosures of which are incorporated herein in their entireties by reference.

### TECHNICAL FIELD

The present disclosure relates to equipment for manufacturing an electrode assembly, a method of manufacturing the electrode assembly, and the electrode assembly.

### BACKGROUND ART

Recently, the demand for mobile devices such as smartphones, tablet PCs and wireless earphones is increasing. Further, as development of electric vehicles, energy storage batteries, robots and satellites gains momentum, research is actively being conducted on high-performance secondary batteries that may be repeatedly charged and discharged as an energy source.

Currently commercially available secondary batteries include nickel-cadmium batteries, nickel-metal hydride batteries, nickel-zinc batteries, and lithium secondary batteries. Among these, lithium secondary batteries have almost no memory effect compared to nickel-based secondary batteries, and thus the lithium secondary batteries have the advantages of free charging and discharging, very low self-discharge rate, and high energy density.

Meanwhile, lithium metal batteries sometimes use lithium metal as the negative electrode. Lithium metal is advantageous in increasing the energy density of batteries. However, since the lithium metal is soft and has a tendency to stick compared to copper (Cu), which was mainly used in the past, the lithium metal is difficult to handle.

### Detailed Description of the Invention

### Technical Goals

The present disclosure may provide electrode assembly manufacturing equipment by which stability is improved by preventing separators and lithium metal from being separated in a high-speed operation by laminating the separators and the lithium metal based on the soft and sticky properties of the lithium metal. The present disclosure may provide electrode assembly manufacturing equipment by which productivity is improved by preventing the alignment problem even when the tension applied to the sheets is not maintained in the high-speed operation or the sheets are misaligned due to the diagonal travel in the roll-to-roll process. The present disclosure may provide electrode assembly manufacturing equipment by which an electrode assembly is manufactured that minimizes short-circuit problems in battery operations by preventing the lithium metal from growing in the laminated direction. The present disclosure may provide a method of manufacturing an electrode assembly using the electrode assembly manufacturing equipment, and provide an electrode assembly that is manufactured by the electrode assembly manufacturing equipment.

### Technical solutions

According to an exemplary embodiment of the present disclosure, electrode assembly manufacturing equipment for a roll-to-roll process includes a sheet providing part including a first sheet providing part configured to supply a first separator sheet and a second separator sheet and a second sheet providing part configured to supply a lithium metal sheet, an application part configured to apply a binder to at least one of the first separator sheet and the second separator sheet, and a laminating part configured to laminate the first separator sheet and the second separator sheet having the lithium metal sheet therebetween, each of the first separator sheet and the second separator sheet includes an inner area corresponding to the lithium metal sheet when being laminated by the laminating part and an outside area surrounding at least a part of an outer part of the inner area in a transverse direction TD, and the application part applies the binder on at least a portion of an outside area of the first separator sheet and an outside area of the second separator sheet.

In the electrode assembly manufacturing equipment according to an exemplary embodiment of the present disclosure, the first separator sheet and the second separator sheet may be bonded to each other based on adhesive strength of the applied binder.

In the electrode assembly manufacturing equipment according to an exemplary embodiment of the present disclosure, the application part may not apply the binder to the inner area of the first separator sheet and the inner area of the second separator sheet.

In the electrode assembly manufacturing equipment according to an exemplary embodiment of the present disclosure, each of the outside area of the first separator sheet and the outside area of the second separator sheet may include a first outside area that is adjacent to a first outside boundary of the lithium metal sheet in the transverse direction TD and a second outside area that is adjacent to a second outside boundary of the lithium metal sheet in the transverse direction TD, and the application part may apply the binder to any one of the first outside area of the first separator sheet and the first outside area of the second separator sheet and any one of the second outside area of the first separator sheet and the second outside area of the second separator sheet.

In the electrode assembly manufacturing equipment according to an exemplary embodiment of the present disclosure, the laminating part may be configured to laminate the first separator sheet and the second separator sheet having the lithium metal sheet therebetween in order for one side of the lithium metal sheet to face the inner area of the first separator sheet and the other side of the lithium metal sheet to face the inner area of the second separator sheet, and the application part may apply the binder continuously or partially to at least a portion of the outside area of the first separator sheet and the outside area of the second separator sheet.

In the electrode assembly manufacturing equipment according to an exemplary embodiment of the present disclosure, the laminating part may include a single pair of guide rollers that are spaced apart by a predetermined gap.

In the electrode assembly manufacturing equipment according to an exemplary embodiment of the present disclosure, the laminating part, when laminating, may be configured to laminate the first separator sheet and the second separator sheet with the lithium metal sheet interposed therebetween, in order for the single pair of guide rollers to contact the first separator sheet and the second separator sheet respectively but not to contact the lithium metal sheet.

In the electrode assembly manufacturing equipment according to an exemplary embodiment of the present disclosure, each of the outside area of the first separator sheet and the outside area of the second separator sheet may include the first outside area that is adjacent to the first outside boundary of the lithium metal sheet in the transverse direction TD and the second outside area that is adjacent to the second outside boundary of the lithium metal sheet in the transverse direction TD, and each guide roller of the single pair of guide rollers may include a first member configured to pressurize the first outside area of each of the first separator sheet and the second separator sheet, a second member configured to pressurize the second outside area of each of the first separator sheet and the second separator sheet, and a connecting member configured to connect the first member and the second member.

In the electrode assembly manufacturing equipment according to an exemplary embodiment of the present disclosure, each of the first member, the second member and the connecting member may have a cylindrical shape.

In the electrode assembly manufacturing equipment according to an exemplary embodiment of the present disclosure, bottom surface diameter r₃ of the connecting member may be smaller than bottom surface diameter r₁ of the first member and bottom surface diameter r₂ of the second member.

In the electrode assembly manufacturing equipment according to an exemplary embodiment of the present disclosure, the first member and the second member may be configured to rotate around the same rotation axis.

In the electrode assembly manufacturing equipment according to an exemplary embodiment of the present disclosure, the connection member may have a bottom surface of which center is located on the rotation axis of the first member and the second member.

In the electrode assembly manufacturing equipment according to an exemplary embodiment of the present disclosure, thickness w₁ of the first member may be equal to or smaller than a length of a first outside area OA_1 of the first separator sheet and the second separator sheet in the transverse direction TD, and thickness w₂ of the second member may be equal to or smaller than a length of a second outside area OA_2 of the first separator sheet and the second separator sheet in the transverse direction TD.

In the electrode assembly manufacturing equipment according to an exemplary embodiment of the present disclosure, thickness w₃ of the connecting member may be equal to or greater than a length ML_TDw of the lithium metal sheet in the transverse direction TD.

According to an exemplary embodiment of the present disclosure, a method of manufacturing an electrode assembly includes preparing a first separator sheet, a second separator sheet and a lithium metal sheet in roll form, applying a binder to at least a portion of one of the first separator sheet and the second separator sheet, and forming an negative electrode structure by laminating the first separator sheet and the second separator sheet having the lithium metal sheet therebetween, and applying the binder includes applying the binder to an outside area surrounding at least a part of an inner area corresponding to the lithium metal sheet in a transverse direction TD when laminating, in at least one of the first separator sheet and the second separator sheet.

The method of manufacturing the electrode assembly according to an exemplary embodiment of the present disclosure may further include alternately stacking the negative electrode structure and the positive electrode by stacking a positive electrode on the formed negative electrode structure, and by folding the negative electrode structure in the transverse direction to surround the positive electrode.

According to an exemplary embodiment of the present disclosure, an electrode assembly includes a positive electrode, a negative electrode and a separator, the negative electrode includes lithium metal, forms an negative electrode structure by being interposed between two separators, the negative electrode structure includes a plurality of stack parts and a plurality of folded parts, the electrode assembly includes a structure in which the stack parts of the negative electrode structure and positive electrode are stacked alternately, at least a portion of each of the two separators protrudes further than the lithium metal in a transverse direction, and the portions formed to protrude of the two separators are bonded to each other by a binder having the lithium metal therebetween.

In the electrode assembly according to an exemplary embodiment of the present disclosure, the positive electrode may include a positive electrode active material layer including a positive electrode active material and a positive electrode current collector configured to support the positive electrode active material layer, and the positive electrode active material may include a sulfur compound.

### Effects of the Invention

The present disclosure may improve stability by preventing separators and lithium metal from being separated in a high-speed operation by laminating the separators and lithium metal based on the characteristics of the lithium metal that is soft and is easily being sticky. The present disclosure may improve productivity by preventing the alignment problem even when the tension applied to the sheets is not maintained in the high-speed operation or the sheets are misaligned due to the diagonal travel in the roll-to-roll process. With the present disclosure, manufactured may be an electrode assembly in which short-circuit problems are minimized when battery is running by preventing dendrite from growing in the direction in which the lithium metal is laminated.

### BRIEF DESCRIPTION OF DRAWINGS

The drawings shown in the present disclosure are in accordance with exemplary embodiments of the present disclosure, and ratios of the width, the height or the thickness (or the height) of each component is intended to detail the present disclosure and the ratios may differ from the actual figures. Further, in the coordinate system shown in the drawing, each axis may be perpendicular to each other, direction the arrow is pointing may be the + direction and the direction opposite to the direction pointed by the above arrow (the direction rotated 180 degrees) may be the - direction.
FIG. 1 is a plan view illustrating at least a portion of electrode assembly manufacturing equipment according to an exemplary embodiment of the present disclosure.
FIG. 2, FIG. 3, and FIG. 4 are plan views illustrating the location and manner in which an application part applies a binder onto a separator sheet according to an exemplary embodiment of the present disclosure.
FIG. 5 is a plan view illustrating an application part and a location where the application part applies a binder onto a separator sheet according to an exemplary embodiment of the present disclosure.
FIG. 6 is a perspective view illustrating separator sheets and a lithium metal sheet moving along the moving direction MD in electrode assembly manufacturing equipment according to an exemplary embodiment of the present disclosure.
FIG. 7, FIG. 8 and FIG. 9 are plan views illustrating the positional relationship of separator sheets and a lithium metal sheet in electrode assembly manufacturing equipment according to an exemplary embodiment of the present disclosure.
FIG. 10 is a perspective view illustrating at least a portion of a laminating part according to an exemplary embodiment of the present disclosure.
FIG. 11 is a perspective view illustrating at least a portion of a guide roller according to an exemplary embodiment of the present disclosure.
FIG. 12 is a plan view illustrating at least a portion of a guide roller according to an exemplary embodiment of the present disclosure.
FIG. 13 is a perspective view illustrating at least a portion of a laminating part according to an exemplary embodiment of the present disclosure.
FIG. 14 is a plan view illustrating at least a portion of a negative electrode structure according to an exemplary embodiment of the present disclosure.
FIG. 15 is a plan view illustrating at least a portion of an electrode assembly according to an exemplary embodiment of the present disclosure.

### DETAILED DESCRIPTION

Prior to the detailed description of the present disclosure, terms or words used in the specification and claims may not be construed as limited to their common or dictionary meanings. Further, the terms or words may be interpreted with meaning and concept consistent with the technical idea of the present disclosure based on the principle that the inventor may appropriately define the concept of terms in order to explain his or her invention in the best way. The example embodiments described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one example embodiment.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the direction shown in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

In the present disclosure, a battery may be used with the same meaning as a cell. Further, a battery or a cell may be a general term for a battery cell, which is a unit of the battery, a battery module containing the battery cell, or a battery pack.

The present disclosure may improve stability by preventing separators and lithium metal from being separated in a high-speed operation by laminating the separators with the lithium metal therebetween based on the characteristics of the lithium metal being soft and sticky. The present disclosure may improve productivity by preventing an alignment problem even when the tension applied to the sheets is not maintained in the high-speed operation or the sheets are misaligned due to the diagonal travel in the roll-to-roll process. The present disclosure may provide an electrode assembly in which short-circuit problems are minimized when the battery is operating by preventing the lithium metal from growing in the laminated direction.

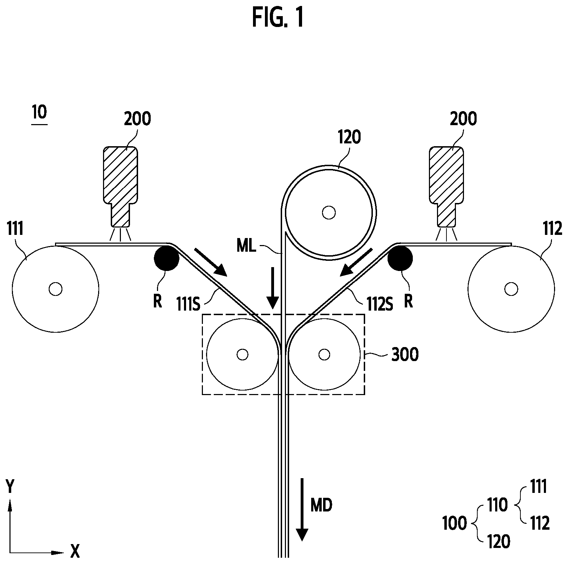

FIG. 1 is a plan view illustrating at least a portion of electrode assembly manufacturing equipment 10 according to an exemplary embodiment of the present disclosure.

In the electrode assembly manufacturing equipment 10, at least some operations may be performed in the roll-to-roll process. The roll-to-roll process is one of the continuous processes that sheet-shaped materials are processed to have new functions by tension being applied to them with rollers R. The roll-to-roll process may be advantageous for mass production because the materials are continuously processed.

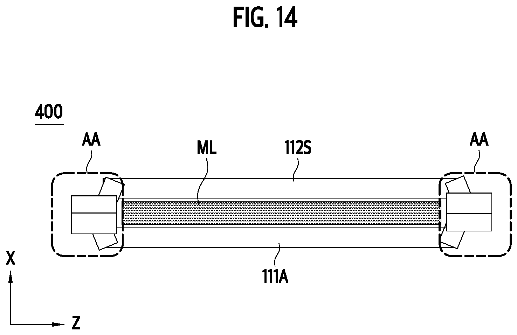

The electrode assembly manufacturing equipment 10 may position a lithium metal sheet ML between a plurality of separator sheets (111S, 112S), and manufacture a negative electrode structure 400 by laminating the plurality of separator sheets (1118S, 112S) (see FIG. 14).

In the present disclosure, a separator sheet may indicate a membrane that prevents electrical short-circuiting between a positive electrode and a negative electrode in a battery cell and allows electron transport substances to pass through. Here, the electron transport material may be, for example, lithium ions (Li⁺), sodium ions (Na⁺) or potassium ions (K⁺).

The plurality of separator sheets (111S, 112S) are not particularly limited as long as they are used in the art, and it is desirable that the sheets have low resistance to ion movement of the electrolyte and excellent wettability of the electrolyte (especially, electrolyte solution). For each of the plurality of separator sheets (111S, 112S), a porous polymer film, for example, a porous polymer film manufactured from a polyolefin material, for example, an ethylene polymer, a propylene polymer, an ethylene/butene copolymer, an ethylene/hexene copolymer or an ethylene/methacrylate copolymer, or a laminated structure of two or more layers thereof may be used.

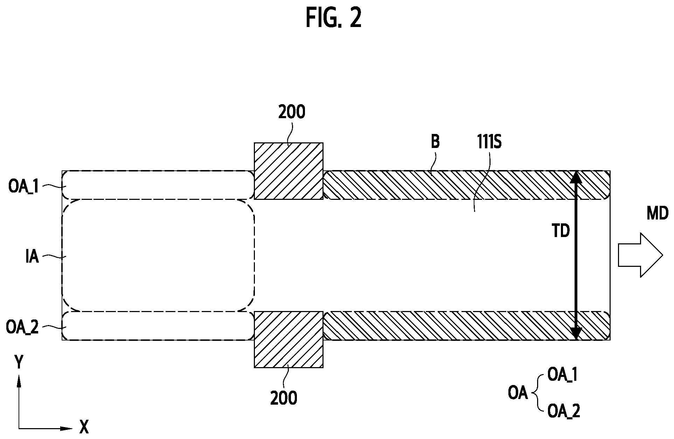

The electrode assembly manufacturing equipment 10 may include a sheet providing part 100 providing a plurality of separator sheets (e.g., a first separator sheet 111S and a second separator sheet 112S) and the lithium metal sheet ML, an application part 200 (see FIG. 2 to FIG. 5) for applying a binder B, and a laminating part 300 for laminating the plurality of separator sheets (111S, 112S) with the lithium metal sheet ML interposed therebetween. Even though not illustrated in the drawings, the plurality of separator sheets (111S, 112S) and the lithium metal sheet ML may be provided with appropriate tension without sagging by means of the rollers R provided at appropriate locations. In an example embodiment, the sheet providing part 100 may continuously supply at least one of the plurality of separator sheets (e.g., the first separator sheet 111S and the second separator sheet 112S) and the lithium metal sheet ML in the roll form. In the present disclosure, continuously supplying may indicate that at least some areas are supplied without interruption.

In order for the electrode assembly manufacturing equipment 10 to continuously manufacture the negative electrode structure 400 of consistent quality, it is advantageous to laminate with the margin parts (e.g., the outer areas in the transverse direction) of the plurality of separator sheets (111S, 112S) and the lithium metal sheet ML aligned while the proper tension being maintained. However, when operating at high speeds in the roll-to-roll process, problems such as tension changes or misalignment due to the diagonal travel may occur at least in some cases. Specifically, it may be said that there is the alignment problem when misalignment occurs.

The electrode assembly manufacturing equipment 10 may apply the binder B to some areas of the plurality of separator sheets (111S, 112S), and bond the plurality of separator sheets (111S, 112S) together based on the adhesive strength of the applied binder B, and thus may improve productivity by preventing alignment problems while ensuring that the laminated separator sheets (111S, 112S) are not separated in a high-speed operation.

In the present disclosure, there is no limitation on the kind of binder B as long as it exhibits adhesive performance by itself or by heat curing or photocuring, and as long as there is no physical or chemical reaction with substances present within the battery cell. For example, the binder B may include an acrylic resin, a urethane resin, an epoxy resin, or a silicone resin, which are generally known to be usable as an adhesive.

The sheet providing part 100 may include a first sheet providing part 110 that supplies the first separator sheet 111S and the second separator sheet 112S. The first sheet providing part 110 may include a 1-1 sheet providing part 111 that supplies the first separator sheet 111S and a 1-2 sheet providing part 112 that supplies the second separator sheet 112S. The first sheet providing part 110 may supply additional separator sheets in addition to the first separator sheet 111S and the second separator sheet 112S. In an exemplary embodiment, the 1-1 sheet providing part 111 may continuously supply the first separator sheet 111S in the roll form. In an exemplary embodiment, the 1-2 sheet providing part 112 may continuously supply the second separator sheet 112S in the roll form.

The sheet providing part 100 may include a second sheet providing part 120 supplying the lithium metal sheet ML. The speeds at which the first sheet providing part 110 and the second sheet providing part 120 supply the separator sheet (111S, 112S) and the lithium metal sheet ML may be set to be the same to prevent alignment problems. In an exemplary embodiment, the second sheet providing part 120 may continuously supply the lithium metal sheet ML in the roll form.

As a device configured to constantly supply the plurality of separator sheets (111S, 112S) and the lithium metal sheet ML, the sheet providing part 100 may include, for example, a conveyor belt. Further, the sheet providing part 100 may set a predetermined path so that a plurality of separator sheets (111S, 112S) and the lithium metal sheet ML may meet in the laminating part 300 described later. In the present disclosure, the direction of the path along which each sheet moves may be referred to as the moving direction MD.

The application part 200 may apply the binder B to at least one of the first separator sheet 111S and the second separator sheet 112S. For example, the electrode assembly manufacturing equipment 10 may include a plurality of application parts 200 in order to apply the binder B at a predetermined location.

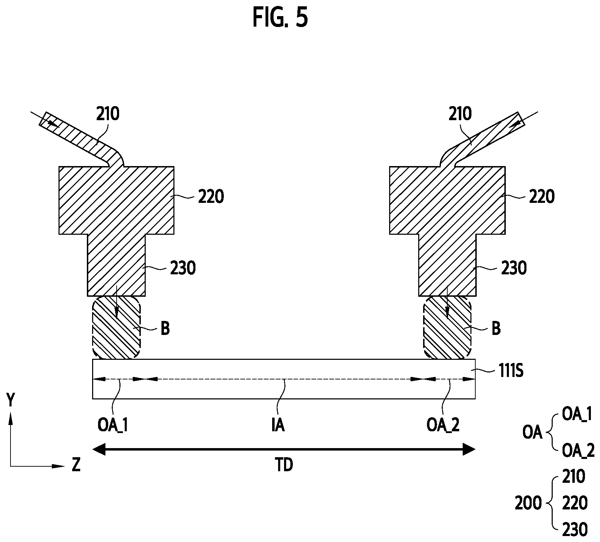

FIG. 2, FIG. 3, and FIG. 4 are plan views illustrating the location and manner in which the application part 200 applies the binder B onto a single separator sheet 111S according to an exemplary embodiments of the present disclosure. FIG. 5 is a plan view illustrating the application part 200 and a location where the application part 200 applies the binder B onto the single separator sheet 111S according to an exemplary embodiment of the present disclosure. The following explanation may be referenced regarding the location and method of applying the binder B to another separator sheet 112S.

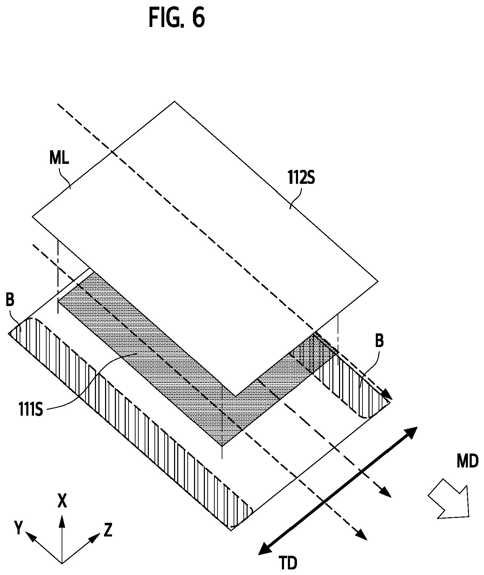

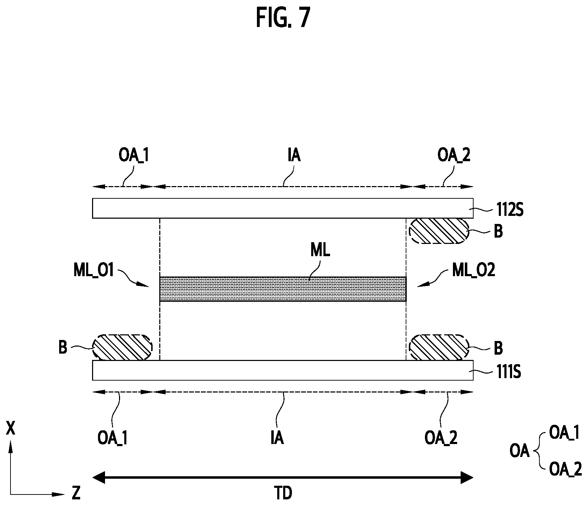

FIG. 6 is a perspective view illustrating the separator sheets (111S, 112S) and the lithium metal sheet ML moving along the moving direction MD in the electrode assembly manufacturing equipment 10 according to an exemplary embodiment of the present disclosure. FIG. 7, FIG. 8 and FIG. 9 are plan views illustrating the positional relationship of the separator sheets (111S, 112S) and the lithium metal sheet ML in the electrode assembly manufacturing equipment 10 according to an exemplary embodiments of the present disclosure.

The application part 200 may apply the binder B to at least one of the first separator sheet 111S and the second separator sheet 112S, which are moved by the sheet providing part 100. The speed at which the sheet providing part 100 supplies the first separator sheet 111S and the second separator sheet 112S may be determined based on the viscosity of the binder B and the binder B discharge speed of the application part 200. The first separator sheet 111S and the second separator sheet 112S may be bonded to each other based on the applied binder B, and this may be performed in the laminating part 300, which will be described later.

Even though the structure of the application part 200 is not particularly restricted, the application part 200 may include an injection part 210 that is injected with the binder B, a storage 220 for storing the binder B received from the injection part 210 and a discharging part 230 that discharges the binder B stored in the storage 220 to the outside. Further, the application part 200 may further include a pump for smooth injection and discharge of the binder B, and may smoothly introduce the binder B into the storage 220 through the injection part 210 or smoothly discharge the binder B to the outside through the discharging part 230 by force applied by the pump. Further, the application part 200 may further include an opening and closing part for opening and closing between the storage 220 and the discharging part 230, and the opening and closing part may further include an element configured to pattern the binder B applied to the first separator sheet 111S or the second separator sheet 112S under control of an electrical signal.

The application part 200 may apply the binder B to at least one of a portion of the first separator sheet 111S and a portion of the second separator sheet 112S. Each of the first separator sheet 111S and the second separator sheet 112S may include an inner area IA corresponding to the lithium metal sheet ML when laminated by the laminating part 300 and an outside area OA, which at least partially surrounds the outer part of the inner area IA in the transverse direction TD. The transverse direction TD may be perpendicular to the moving direction MD.

Here, the application part 200 may apply the binder B to at least a portion of the outside area OA of the first separator sheet 111S and the outside area OA of the second separator sheet 112S. Further, the application part 200 may apply the binder B to none of the inner area IA of the first separator sheet 111S and the inner area IA of the second separator sheet 112S.

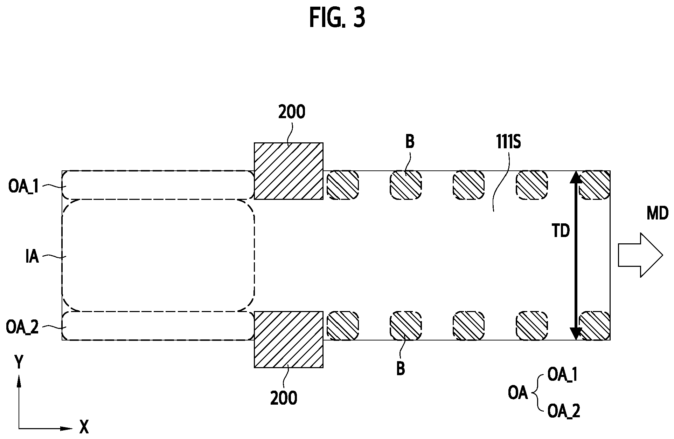

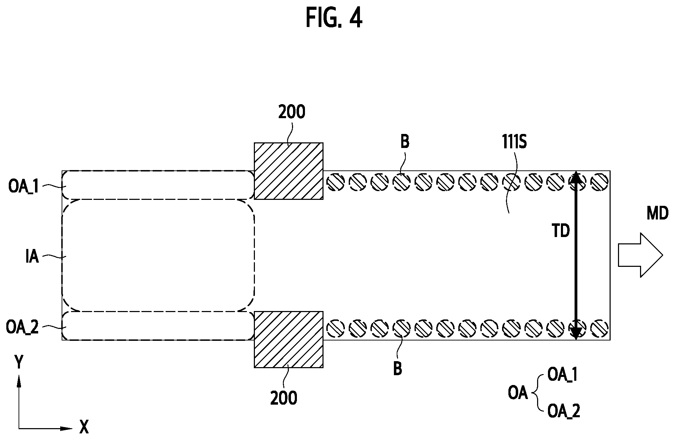

There are no particular limitation on the manner in which the application part 200 applies the binder B. For example, the application part 200 may apply the binder B continuously or intermittently to at least a portion of the outside area OA of the first separator sheet 111S and the outside area OA of the second separator sheet 112S. Referring to FIG. 2, the application part 200 may apply the binder B continuously. Referring to FIG. 3 and FIG. 4, the application part 200 may intermittently apply the binder B. The application part 200 may implement a method of applying the binder B, for example, through the aforementioned opening and closing part.

Each of the outside area OA of the first separator sheet 111S and the outside area OA of the second separator sheet 112S may include a first outside area OA_1 adjacent to a first outside boundary ML_O1 of the lithium metal sheet ML in the transverse direction TD and a second outside area OA_2 adjacent to a second outside boundary ML_O2 of the lithium metal sheet ML in the transverse direction TD. The first outside boundary ML_O1 of the transverse direction TD of the lithium metal sheet ML may be located on the opposite side of the second outside boundary ML_O2.

The application part 200 may apply the binder B to at least one of the first outside area OA_1 of the first separator sheet 111S and the first outside area OA_1 of the second separator sheet 112S, and at least one of the second outside area OA_2 of the first separator sheet 111S and the second outside area OA_2 of the second separator sheet 112S. In other words, the application part 200 may apply the binder B by properly positioning the binder B in order for the first separator sheet 111S and the second separator sheet 112S to be laminated in the outside area OA.

For example, referring to FIG. 7, the application part 200 may apply the binder B to both the first outside area OA_1 and the second outside area OA_2 of the first separator sheet 111S, and apply the binder B only to the second outside area OA_2 of the second separator sheet 112S.

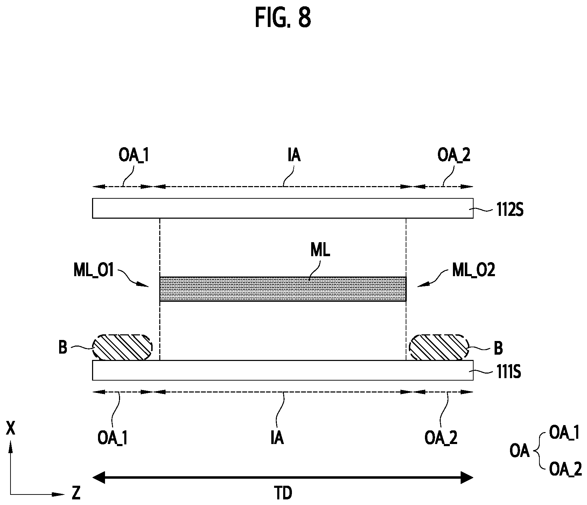

Further, referring to FIG. 8, the application part 200 may apply the binder B to both the first outside area OA_1 and the second outside area OA_2 of the first separator sheet 111S, and may not apply the binder B to the second separator sheet 112S. Alternatively, in another example embodiment, the application part 200 may not apply the binder B to the first separator sheet 111S, but apply the binder B to both the first outside area OA_1 and the second outside area OA_2 of the second separator sheet 112S. Even if the binder B is applied like this, there is no problem in bonding the first separator sheet 111S and the second separator sheet 112S with the binder B.

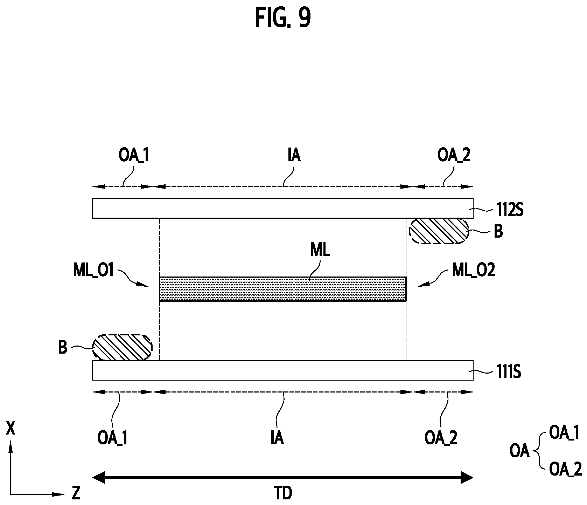

Further, referring to FIG. 9, the application part 200 may apply the binder B only to the first outside area OA_1 of the first separator sheet 111S and the second outside area OA_2 of the second separator sheet 112S. Alternatively, the application part 200 may apply the binder B only to the second outside area OA_2 of the first separator sheet 111S and the first outside area OA_1 of the second separator sheet 112S.

Even though not illustrated, the application part 200 may apply the binder B to all of the first outside area OA_1 and the second outside area OA_2 of the first separator sheet 111S, and the first outside area OA_1 and the second outside area OA_2 of the second separator sheet 112S, and further may omit application of the binder B to only one of these areas.

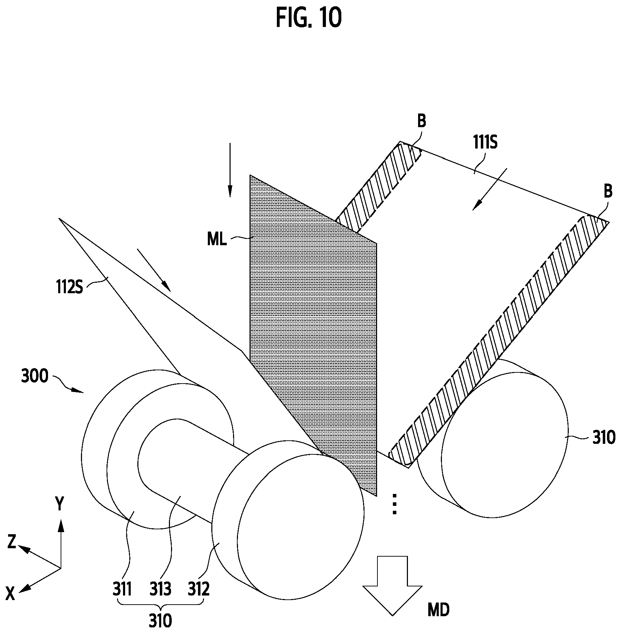

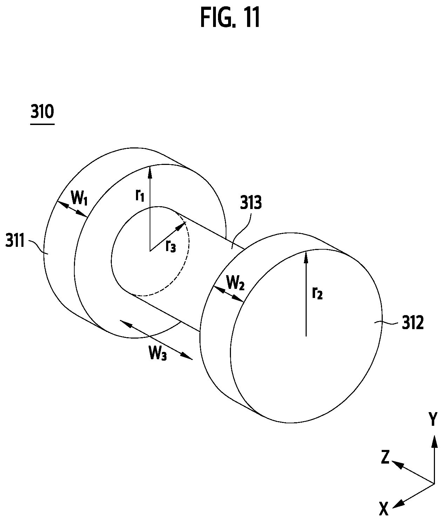

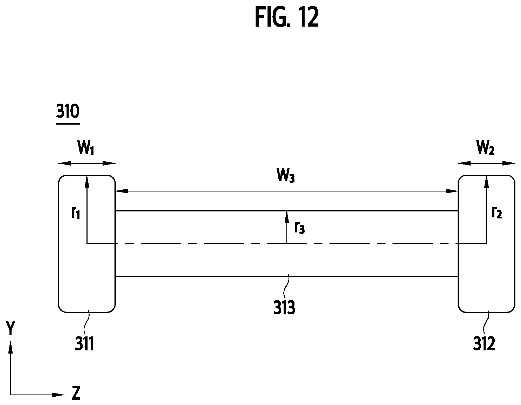

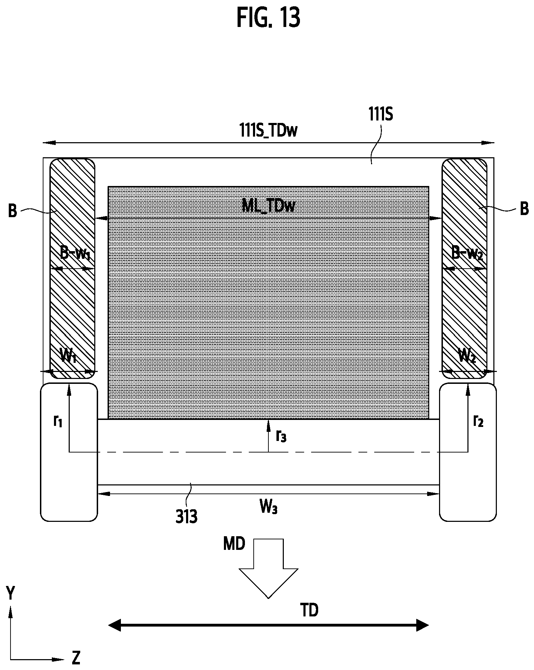

FIG. 10 is a perspective view illustrating at least a portion of the laminating part 300 according to an exemplary embodiment of the present disclosure. FIG. 11 is a perspective view illustrating at least a portion of a guide roller 310 according to an exemplary embodiment of the present disclosure. FIG. 12 is a plan view illustrating at least a portion of the guide roller 310 according to an exemplary embodiment of the present disclosure. FIG. 13 is a perspective view illustrating at least a portion of the laminating part 300 according to an exemplary embodiment of the present disclosure.

The laminating part 300 may laminate the first separator sheet 111S and the second separator sheet 112S having the lithium metal sheet ML therebetween. Specifically, in order for one side of the lithium metal sheet ML to face the inner area IA of the first separator sheet 111S, and in order for the other side of the lithium metal sheet ML to face the inner area IA of the second separator sheet 112S, the laminating part 300 may laminate the first separator sheet 111S and the second separator sheet 112S having the lithium metal sheet ML therebetween. The laminating part 300 may, for example, include a pair of guide rollers 310 spaced apart by a predetermined gap, and implement lamination using the pair of guide rollers 310.

Referring to FIG. 10, the pair of guide rollers 310 may be spaced apart by a certain gap, and the gap may correspond to the degree through which the first separator sheet 111S, the lithium metal sheet ML and the second separator sheet 112S all pass and in which a portion of the first separator sheet 111S and a portion of the second separator sheet 112S come into contact with each other by the pressing force of the pair of guide rollers 310.

In order for the one pair of guide rollers 310 to contact each of the first separator sheet 111S and the second separator sheet 112S in the laminating process but not to contact the lithium metal sheet ML, the laminating part 300 may perform the lamination by interposing the lithium metal sheet ML between the first separator sheet 111S and the second separator sheet 112S. Here, the first separator sheet 111S may come into contact with one side of the lithium metal sheet ML, and the second separator sheet 112S may come into contact with the other surface of the lithium metal sheet ML.

Each of the one pair of guide rollers 310 may include a first member 311 pressurizing the first outside area OA_1 of each of the first separator sheet 111S and the second separator sheet 112S, a second member 312 pressurizing the second outside area OA_2 of each of the first separator sheet 111S and the second separator sheet 112S and a connecting member 313 connecting the first member 311 and the second member 312. The first member 311 and the second member 312 of each of the one pair of guide rollers 310 pressurize the first separator sheet 111S and the second separator sheet 112S at positions corresponding to the first outside area OA_1 and the second outside area OA_2, and thus the first separator sheet 111S and the second separator sheet 112S may be bonded to each other by the adhesive force of the binder B applied to these areas.

Meanwhile, the connecting member 313 may or may not pressurize the inner area IA while passing through the position corresponding to the inner area IA of each of the first separator sheet 111S and the second separator sheet 112S.

Each of the first member 311, the second member 312 and the connection member 313 may have a cylindrical shape. The cylindrical shape may have a circular base and a square side. Only the first separator sheet 111S and the second separator sheet 112S pass between the first member 311 and the second member 312 of the one pair of guide rollers 310, but the first separator sheet 111S, the second separator sheet 112S and the lithium metal sheet ML may pass between the connecting members 313. Therefore, for a uniform lamination, the bottom surface diameter r₃ of the connecting member 313 may be smaller than the bottom surface diameter r₁ of the first member 311 and the bottom surface diameter r₂ of the second member 312.

Meanwhile, for a uniform lamination, the bottom surface diameter r₁ of the first member 311 and the bottom surface diameter r₂ of the second member 312 may be the same. Further, for a uniform lamination, the difference between the bottom surface diameter r₁ of the first member 311, the bottom surface diameter r₂ of the second member 312, and the bottom surface diameter r₃ of the connecting member 313 may be equal to or greater than the length of the lithium metal sheet ML in the transverse direction.

The first member 311 and the second member 312 may be arranged to rotate about the same rotational axis. The members configured to rotate press the outside areas OA of the first separator sheet 111S and the second separator sheet 112S to bond them together, and thus the members may help increase production speed.

Further, the center (i.e., the center of the circle) of the bottom of the connecting member 313 may be located on the rotation axes of the first member 311 and the second member 312. The guide roller 310 of this structure may help in uniform lamination.

When the application part 200 continuously applies the binder B to at least a portion of the outside area OA of the first separator sheet 111S and the outside area OA of the second separator sheet 112S, the thickness w₁ of the first member 311 may be equal to or greater than the length B_w₁ in the transverse direction TD of the binder B applied to at least one of the first outside area OA_1 of the first separator sheet 111S and the first outside area OA_1 of the second separator sheet 112S. The thickness w₂ of the second member 312 may be equal to or greater than the length B_w₂ in the transverse direction TD of the binder B applied to at least one of the second outside area OA_2 of the first separator sheet 111S and the second outside area OA_2 of the second separator sheet 112S.

Meanwhile, the thickness w₁ of the first member 311 may be less than or equal to the length of the first outside area OA_1 of the first separator sheet 111S and the second separator sheet 112S in the transverse direction TD, and the thickness w₂ of the second member 312 may be less than or equal to the length of the second outside area OA_2 of the first separator sheet 111S and the second separator sheet 112S in the transverse direction TD. Here, each of the thickness w₁ of the first member 311 and the thickness w₂ of the second member 312 may indicate the height (vertical distance between bases) of a cylinder.

The thickness w₃ of the connecting member 313 may be equal to or greater than the length ML_TDw of the lithium metal sheet ML in the transverse direction TD. Here, the thickness w₃ of the connecting member 313 may indicate the height of the cylinder shape (the vertical distance between the bases).

Meanwhile, the sum of the thickness w₁ of the first member 311, the thickness w₂ of the second member 312, and the thickness w₃ of the connecting member 313 may be equal to or greater than the length 111S_TDw of the first separator sheet 111S in the transverse direction TD. Further, the length of the second separator sheet 112S in the transverse direction TD may also be the same.

FIG. 14 is a plan view illustrating at least a portion of the negative electrode structure 400 according to an exemplary embodiment of the present disclosure.

The electrode assembly manufacturing equipment 10 may manufacture the negative electrode structure 400 with bonded areas AA formed at both ends, by bonding the first separator sheet 111S and the second separator sheet 112S together with the binder B by passing the first separator sheet 111S, the second separator sheet 112S and the lithium metal sheet ML through the laminating part 300. The electrode assembly manufacturing equipment 10 may further include additional devices to improve the adhesive performance of the binder B, and may further include, for example, at least one of a heating device and a drying device.

Meanwhile, the present disclosure may provide a method for manufacturing an electrode assembly. With respect to the method of manufacturing the electrode assembly, the contents of the electrode assembly manufacturing equipment 10 described above may be referred to unless there is any contradictory content.

The method for manufacturing an electrode assembly may include an operation of preparing the first separator sheet 111S, the second separator sheet 112S and the lithium metal sheet ML in a roll form. The operation may be implemented by the sheet providing part 100 of the electrode assembly manufacturing equipment 10.

The method for manufacturing an electrode assembly may include applying the binder B to at least a portion of one of the prepared first separator sheet 111S and the second separator sheet 112S. The operation may be implemented by the application part 200 of the electrode assembly manufacturing equipment 10.

The method for manufacturing an electrode assembly may include forming the negative electrode structure 400 by laminating the first separator sheet 111S and the second separator sheet 112S having the lithium metal sheet ML therebetween. The operation may be implemented by the laminating part 300 of the electrode assembly manufacturing equipment 10.

In the method of manufacturing the electrode assembly, applying the binder B may include applying the binder B on the outside area OA that at least partially surrounds the inner area IA corresponding to the lithium metal sheet ML in the transverse direction TD during the lamination, in at least one of the first separator sheet 111S and the second separator sheet 112S.

The method of manufacturing the electrode assembly may further include sequentially stacking the negative electrode structure 400 and positive electrode 500 alternately by stacking the positive electrode 500 on the formed negative electrode structure 400 and folding the negative electrode structure 400 in the transverse direction TD to surround the positive electrode 500.

The positive electrode 500 may include a positive electrode active material layer and a positive electrode current collector supporting the positive electrode active material layer. The positive electrode 500 may include a structure in which a positive electrode active material layer is formed on at least one side or both sides of the positive electrode collector. The positive electrode active material layer may include a positive electrode active material, and may further include binders, conductive agents, and additives as needed.

The positive electrode current collector is not particularly limited as long as it supports the positive electrode active material layer and is conductive without entailing physical and chemical changes to the composition included in an electrode assembly 50 and battery cell and so on. For example, as the positive electrode current collector, aluminum, stainless steel, nickel, titanium, copper, palladium, calcined carbon, carbon, nickel or silver-treated copper or stainless steel or aluminum-cadmium alloys may be used. Further, the surface of the positive electrode current collector may have fine irregularities, and the irregularities may have various shapes, such as a film, sheet, foil, mesh, net and foam.

The positive electrode active material may include a compound that may reversibly intercalate and deintercalate lithium ions, sodium ions, or potassium ions. For example, lithium, sodium or potassium compounds used as positive electrode active materials may have a layered structure, a crystal structure or a combination of these. Further, in the present disclosure, lithium, sodium or potassium compounds used as positive electrode active materials may have a layered structure, a crystal structure or a combination of these. Further, in the present disclosure, the lithium compounds may encompass all compounds in which auxiliary elements, coating elements, and doping elements are introduced or substituted around the main active element. The main active element may include one or more selected from the group consisting of, for example, nickel (Ni), cobalt (Co), manganese (Mn) and aluminum (Al). The auxiliary elements, the coating elements and the doping elements are elements that may be combined with the main active element to improve the structural and chemical stability of the positive electrode active material, and may be distinguished according to the way they are combined with the main active element. Here, being combined with the main active element may include not only that a chemical bond is formed with the main active element but also existence on the surface of the positive electrode active material or existence by penetrating from the surface. Further, for example, each of the auxiliary elements, the coating elements and the doping elements may independently include at least one selected from the group consisting of group 1 elements, group 2 elements, group 13 elements, group 14 elements, group 15 elements, group 16 elements, and transition metals in the periodic table, excluding lithium. Specifically, for example, each of the auxiliary elements, the coating elements and the doping elements may independently include at least one selected from the group consisting of sodium (Na), magnesium (Mg), calcium (Ca), yttrium (Y), titanium (Ti), hafnium (Hf), vanadium (V), niobium (Nb), tantalum (Ta), chromium (Cr), molybdenum (Mo), tungsten (W), iron (Fe), copper (Cu), silver (Ag), zinc (Zn), boron (B), gallium (Ga), carbon (C), silicon (Si), tin (Sn), strontium (Sr), barium (Ba), radium (Ra), phosphorus (P) and zirconium (Zr). For example, the positive electrode active material may include at least one selected from the group consisting of nickel-cobalt-manganese oxide (NCM), nickel-cobalt-aluminum oxide (NCA), nickel-cobalt-manganese-aluminum oxide (NCMA), cobalt oxide (LCO), manganese oxide (LMO), and iron phosphate (LFP) combined with lithium, sodium or potassium.

Meanwhile, the positive electrode active material may contain a sulfur compound. The sulfur compound may include at least one selected from the group consisting of elemental sulfur (S₈), organosulfur compound Li₂Sₓ (x is 1 or more), and carbon-sulfur polymer ((C₂S_{y})ₙ, y=2.5 to 50, n is 1 or more). It is desirable that the sulfur compound contains elemental sulfur (S₈). When the positive electrode active material contains a sulfur compound, the electrode assembly 50 may be applied to lithium-sulfur batteries.

The binder may contain a compound having properties capable of improving the internal bonding strength of the positive electrode active material layer and improving the adhesion of the positive electrode active material layer to the positive electrode current collector. For example, the binder may include one or more selected from the group consisting of Polyvinylidene fluoride (PVDF), polyvinyl alcohol, styrene butadiene rubber (SBR), polyethylene oxide, carboxyl methyl cellulose (CMC), cellulose acetate, cellulose acetate butylate, cellulose acetate propionate, cyanoethylpullulan, cyanoethyl polyvinylalcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate and polyarylate.

The conductive agents may include compounds that may enhance the conductivity and ion or electron mobility of the positive electrode active material layer. The conductive agents may include carbon-based conductive agents such as, for example, graphite, carbon black, acetylene black, Ketjen black, graphene, carbon nanotube (CNT), vapor-grown carbon fiber (VGCF) and carbon fiber, and/or metal series conductive agents including tin, tin oxide, titanium oxide, perovskite materials such as LaSrCoO₃ and LaSrMnO₃. The carbon nanotube (CNT) may include one or more selected from the group consisting of multi-walled nanotubes (MWCNTs) and single-walled nanotubes (SWCNTs) depending on the number of walls.

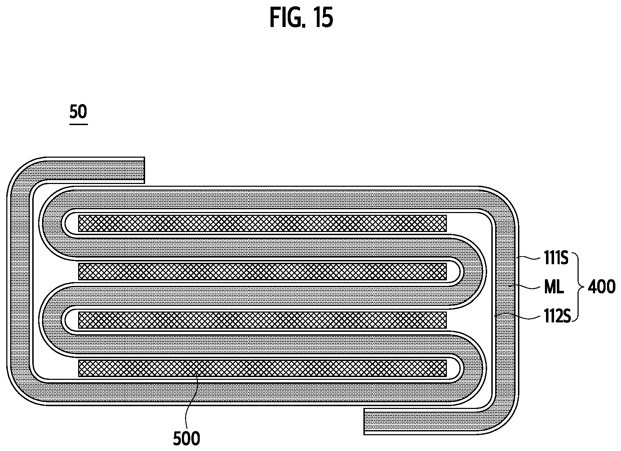

FIG. 15 is a plan view illustrating at least a portion of the electrode assembly 50 according to an exemplary embodiment of the present disclosure. The electrode assembly 50 may include the positive electrode 500, a negative electrode and a separator. Meanwhile, the electrode assembly manufacturing equipment 10 may further include a positive electrode supply device, and may manufacture the electrode assembly 50 by combining the positive electrode 500 and the negative electrode structure 400 provided from the positive electrode supply device. Here, the negative electrode structure 400 includes lithium metal, and the lithium metal may be sandwiched between two separators. Further, the two separators may be formed to protrude at least partially in the transverse direction TD relative to the lithium metal, and at least of the protruding portions of the two separators may be bonded to each other by the binder B having the lithium metal interposed therebetween. This may be implemented with the electrode assembly manufacturing equipment 10 described above. In other words, the two separators may be manufactured by the first separator sheet 111S and the second separator sheet 112S, and the protruding portions of the two separators may correspond to the outside areas OA of the first separator sheet 111S and the second separator sheet 112S.

Further, the electrode assembly 50 may be manufactured, for example, by bending the negative electrode structure 400 manufactured in the form of a long sheet in a zigzag manner (folding) and then inserting the positive electrode 500 cut to an appropriate size into spaces formed by the bending. The negative electrode structure 400 may be made into a curved shape due to its soft nature even though it contains the lithium metal sheet ML. However, the positive electrode 500 is less easy to fold and easier to cut than the negative electrode structure 400, and thus the positive electrode 500 may be cut to an appropriate size and used as described above.

The negative electrode structure 400 may include stack parts forming a laminated structure with the inserted positive electrodes 500 and a folded portion folded as described above. The electrode assembly 50 may have a structure in which the stack parts of the negative electrode structure 400 and the positive electrodes 500 are sequentially stacked alternately.

A battery cell may be manufactured by embedding the electrode assembly 50 manufactured with the electrode assembly manufacturing equipment 10 into a case together with an electrolyte. Further, with the battery cells, a battery module, a battery pack or an energy storage device may be manufactured.

The electrode assembly manufacturing equipment 10 may be widely applied in green technology fields such as electric vehicles, battery charging stations, and other battery-based solar and wind power generation. Further, the electrode assembly manufacturing equipment 10 may be applied to eco-friendly Electric Vehicles or Hybrid Vehicles to prevent climate change by suppressing air pollution and greenhouse gas emissions.

In the above, various embodiments of the present disclosure are described in detail. However, it will be apparent to those with average knowledge in the technical field that scope of rights of this disclosure is not limited thereto, and various modifications and variations are possible without departing from the technical spirit of the present disclosure as set forth in the claims. Further, the above-described exemplary embodiments may be implemented with some elements deleted, and each exemplary embodiment may be implemented in combination with each other.

### Description of Symbols

10... Electrode assembly manufacturing equipment
50... Electrode assembly
100... Sheet providing part
110... First sheet providing part
111... 1-1 sheet providing part
111S... First separator sheet
112... 1-2 sheet providing part
112S... Second separator sheet
120... Second sheet providing part
ML... Lithium metal sheet
200... Application part
210... Injection part
220... Storage
230... Discharging part
300... Laminating part
310... Guide roller
311... First member
312... Second member
313... Third member
400... Negative electrode structure
500... Positive electrode

## Claims

1. Electrode assembly manufacturing equipment of roll-to-roll process, the equipment comprising:
a sheet providing part comprising a first sheet providing part configured to supply a first separator sheet and a second separator sheet, and a second sheet providing part configured to supply a lithium metal sheet;
an application part configured to apply a binder to at least one of the first separator sheet and the second separator sheet; and
a laminating part configured to laminate the first separator sheet and the second separator sheet with the lithium metal sheet therebetween,
wherein each of the first separator sheet and the second separator sheet comprises an inner area corresponding to the lithium metal sheet when being laminated by the laminating part and an outside area surrounding at least a part of an outer part of the inner area in a transverse direction TD, and
wherein the application part is configured to apply the binder on at least a portion of the outside area of the first separator sheet and the outside area of the second separator sheet.

2. The electrode assembly manufacturing equipment of claim 1,
wherein the first separator sheet and the second separator sheet are bonded to each other based on adhesive strength of the applied binder.

3. The electrode assembly manufacturing equipment of claim 1,
wherein the application part is configured not to apply the binder to the inner area of the first separator sheet and the inner area of the second separator sheet.

4. The electrode assembly manufacturing equipment of claim 1,
wherein each of the outside area of the first separator sheet and the outside area of the second separator sheet comprises a first outside area that is adjacent to a first outside boundary of the lithium metal sheet in the transverse direction TD and a second outside area that is adjacent to a second outside boundary of the lithium metal sheet in the transverse direction TD, and
wherein the application part is configured to apply the binder to
any one of the first outside area of the first separator sheet and the first outside area of the second separator sheet, and any one of the second outside area of the first separator sheet and the second outside area of the second separator sheet.

5. The electrode assembly manufacturing equipment of claim 1,
wherein the laminating part is configured to laminate the first separator sheet and the second separator sheet having the lithium metal sheet therebetween in order for one side of the lithium metal sheet to face the inner area of the first separator sheet and the other side of the lithium metal sheet to face the inner area of the second separator sheet, and
wherein the application part is configured to apply the binder continuously or intermittently to at least a portion of the outside area of the first separator sheet and the outside area of the second separator sheet.

6. The electrode assembly manufacturing equipment of claim 1,
wherein the laminating part comprises a single pair of guide rollers that are spaced apart by a predetermined gap.

7. The electrode assembly manufacturing equipment of claim 6,
wherein the laminating part, when laminating,
is configured to laminate the first separator sheet and the second separator sheet with the lithium metal sheet interposed therebetween, in order for the single pair of guide rollers to contact the first separator sheet and the second separator sheet, respectively, but not to contact the lithium metal sheet.

8. The electrode assembly manufacturing equipment of claim 6,
wherein each of the outside area of the first separator sheet and the outside area of the second separator sheet comprises a first outside area that is adjacent to a first outside boundary of the lithium metal sheet in the transverse direction TD and a second outside area that is adjacent to a second outside boundary of the lithium metal sheet in the transverse direction TD, and
wherein each guide roller of the single pair of guide rollers comprises:
a first member configured to pressurize the first outside area of each of the first separator sheet and the second separator sheet;
a second member configured to pressurize the second outside area of each of the first separator sheet and the second separator sheet; and
a connecting member configured to connect the first member and the second member.

9. The electrode assembly manufacturing equipment of claim 8,
wherein a bottom surface diameter r₃ of the connecting member is smaller than a bottom surface diameter r₁ of the first member and bottom surface diameter r₂ of the second member.

10. The electrode assembly manufacturing equipment of claim 8,
wherein a thickness w₁ of the first member is equal to or smaller than a length of a first outside area OA_1 of the first separator sheet and the second separator sheet in the transverse direction TD, and a thickness w₂ of the second member is equal to or smaller than a length of a second outside area OA_2 of the first separator sheet and the second separator sheet in the transverse direction TD.

11. The electrode assembly manufacturing equipment of claim 8, wherein a thickness w₃ of the connecting member is equal to or greater than a length ML_TDw of the lithium metal sheet in the transverse direction TD.

12. A method of manufacturing an electrode assembly, the method comprising:
preparing a first separator sheet, a second separator sheet and a lithium metal sheet in roll form;
applying a binder to at least a portion of one of the first separator sheet and the second separator sheet; and
forming a negative electrode structure by laminating the first separator sheet and the second separator sheet having the lithium metal sheet therebetween,
wherein applying the binder comprises
applying the binder to an outside area of in at least one of the first separator sheet and the second separator sheet surrounding at least a part of an inner area corresponding to the lithium metal sheet in a transverse direction TD when laminating.

13. The method of manufacturing the electrode assembly of claim 12, further comprising
stacking a positive electrode on the negative electrode structure, and folding the negative electrode structure in the transverse direction to surround the positive electrode, alternately stacking the negative electrode structure and the positive electrode.

14. An electrode assembly comprising a positive electrode, a negative electrode and a separator,
wherein the negative electrode comprises lithium metal, and is to form an negative electrode structure by being interposed between two separators, wherein the negative electrode structure comprises a plurality of stack parts and a plurality of folded parts,
the electrode assembly comprising a structure in which the stack parts of the negative electrode structure and positive electrode are stacked alternately,
wherein at least a portion of each of the two separators is further protruding than the lithium metal in a transverse direction, and
wherein the formed portions to protrude of the two separators are bonded to each other by a binder having the lithium metal therebetween.

15. The electrode assembly of claim 14,
wherein the positive electrode comprises a positive electrode active material layer comprising a positive electrode active material and a positive electrode current collector configured to support the positive electrode active material layer,
wherein the positive electrode active material comprises a sulfur compound.
